# DEMANDE DE BREVET EUROPEEN

(11) **EP 1 982 792 A1**
(43) Date de publication de la demande: **22.10.2008**
(21) Numéro de dépôt: 08154214.4
(22) Date de dépôt: 08.04.2008
(51) Int. Cl.: B23P 19/02, F04D 29/60

(54) **Outil de démontage d'un élément interne d'un corps de compresseur**

(30) Priorité: 16.04.2007 FR 0754494
(71) Demandeur: Thermodyn, 92400 Courbevoie (FR)
(72) Inventeur: Lapret, Serge, 71670, LE BREUIL (FR)
(74) Mandataire: Delprat, Olivier

(57) **Abrégé**

Cet outil de démontage comprend un chemin de roulement (17) destiné à être introduit axialement dans le corps du compresseur (10) en passant à travers l'élément à démonter (15, 16), un dispositif de fixation et de centrage (22) du chemin de roulement en position axiale par rapport au corps du compresseur et un chariot (18) destiné à être fixé sur l'élément à démonter et comprenant au moins un rouleau (34) destiné à venir en appui sur le chemin de roulement.

## Description

L'invention se rapporte aux compresseurs centrifuges et, plus particulièrement, aux compresseurs centrifuges pourvus d'une enveloppe à plan de joint vertical.

Les compresseurs de ce type comportent classiquement un corps dans lequel sont placées des pièces de la partie aérodynamique du compresseur et le rotor, généralement agencés sous la forme d'une cartouche assemblée venant se monter à l'intérieur du corps.

L'une des extrémités du corps est fermée par un couvercle rapporté, qui comporte des moyens d'étanchéité qui assurent l'étanchéité au gaz manipulé, au niveau de la sortie de l'arbre du rotor, et un palier pour le rotor, ce couvercle étant fixé par boulonnage ou par des anneaux de cisaillement.

A l'autre extrémité, le corps du compresseur est fermé par un fond. Dans certains types de compresseurs, ce fond est également rapporté et comporte, au niveau de son diamètre extérieur, un ou plusieurs joints qui assurent l'étanchéité de l'enveloppe. Ces joints peuvent, pour diverses raisons, être altérés et ainsi être le siège de fuites, ce qui rend nécessaire leur remplacement à titre de la maintenance du compresseur et, en conséquence, le démontage du fond.

Généralement, cette opération s'effectue, après démontage du couvercle et de la cartouche intégrant les éléments aérodynamiques et le rotor, en plaçant le corps du compresseur en position verticale et en extrayant le fond en le tirant vers le haut au pont roulant.

Cette opération nécessite ainsi le démontage des tuyauteries d'aspiration et de refoulement, ce que rechignent généralement les exploitants à effectuer en raison du réglage délicat à mettre en oeuvre pour limiter les efforts appliqués sur les compresseurs.

Par ailleurs, le démontage du corps du compresseur est également une opération longue et délicate compte tenu des masses importantes mises en jeu. En effet, la masse du corps d'un compresseur peut atteindre 7,3 tonnes et la masse du couvercle peut atteindre 1,8 tonne. Par conséquent, les exploitants doivent disposer de moyens de levage conséquents pour mettre en oeuvre les opérations de maintenance.

Au vu de ce qui précède, il existe un besoin pour disposer d'un outillage qui permette le démontage du fond du compresseur et de la volute interne sans nécessiter de placer le corps du compresseur en position verticale.

L'invention propose donc un outil de démontage d'un élément interne d'un corps de compresseur comprenant un chemin de roulement destiné à être introduit axialement dans le corps du compresseur en passant à travers l'élément à démonter, un dispositif de fixation et de centrage du chemin de roulement en position axiale par rapport au corps du compresseur et un chariot destiné à être fixé sur l'élément à démonter et comprenant au moins un rouleau destiné à venir en appui sur le chemin de roulement.

Ainsi, grâce à l'utilisation du chemin de roulement, il est possible de déplacer l'élément à démonter selon une trajectoire horizontale et donc de procéder au démontage en laissant le corps du compresseur en position horizontale sur son socle.

Il n'est donc pas nécessaire de séparer le compresseur de ses tuyauteries de gaz et de procéder à un nouveau réglage du corps sur le socle, d'où un gain de temps et une réduction de l'exposition du personnel de maintenance aux atmosphères dangereuses.

Selon une autre caractéristique de l'invention, le dispositif de fixation et de centrage comprend un pied prévu à l'une des extrémités du corps du compresseur et sur lequel repose une première extrémité du chemin de roulement et une platine fixée à l'autre extrémité du corps du compresseur et comprenant un passage axial pour une deuxième extrémité du chemin de roulement.

Selon encore une autre caractéristique de l'invention, la platine comprend des éléments de paroi axiaux s'étendant, à l'usage, généralement parallèlement au chemin de roulement et comprenant des passages pour des vis de réglage et de centrage du chemin de roulement.

Avantageusement, la platine est pourvue, au voisinage de ses extrémités, de vis de poussée aptes à exercer lors de leur vissage un effort sur ledit élément pour le désolidariser du corps du compresseur.

Dans un mode de réalisation, l'outil de démontage peut en outre comporter un ensemble d'au moins une tige filetée coopérant avec un taraudage pratiqué dans le chariot.

Dans un mode de réalisation particulier, l'outil comporte en outre un système de contrepoids prévu au niveau de la première extrémité du chemin de roulement pour compenser l'effort appliqué par l'élément à démonter sur le chemin de roulement.

Enfin, selon encore une autre caractéristique de l'invention, le chemin de roulement est constitué par une barre ayant une section en H.

L'invention a encore pour objet, selon un deuxième aspect, l'utilisation d'un outil tel que défini ci-dessus pour le démontage d'un fond ou d'un couvercle d'un compresseur.

Elle a encore pour objet, selon un troisième aspect, l'utilisation d'un outil tel que défini ci-dessus pour démontage d'une volute d'un compresseur.

D'autres buts, caractéristiques et avantages de l'invention apparaîtront à la lecture de la description suivante, donnée uniquement à titre d'exemple non limitatif, et faite en référence aux dessins annexés, sur lesquels :
- les figures 1 et 2 sont des vues en perspective d'un corps de compresseur pourvu d'un outil de démontage conforme à l'invention ;
- la figure 3 est une vue de détail, à plus grande échelle, du chariot de l'outil de démontage des figures 1 et 2 ;
- la figure 4 est une vue de détail des moyens de centrage du chemin de roulement ;
- la figure 5 est une vue de détail des moyens de centrage du chemin de roulement par rapport au corps du compresseur.

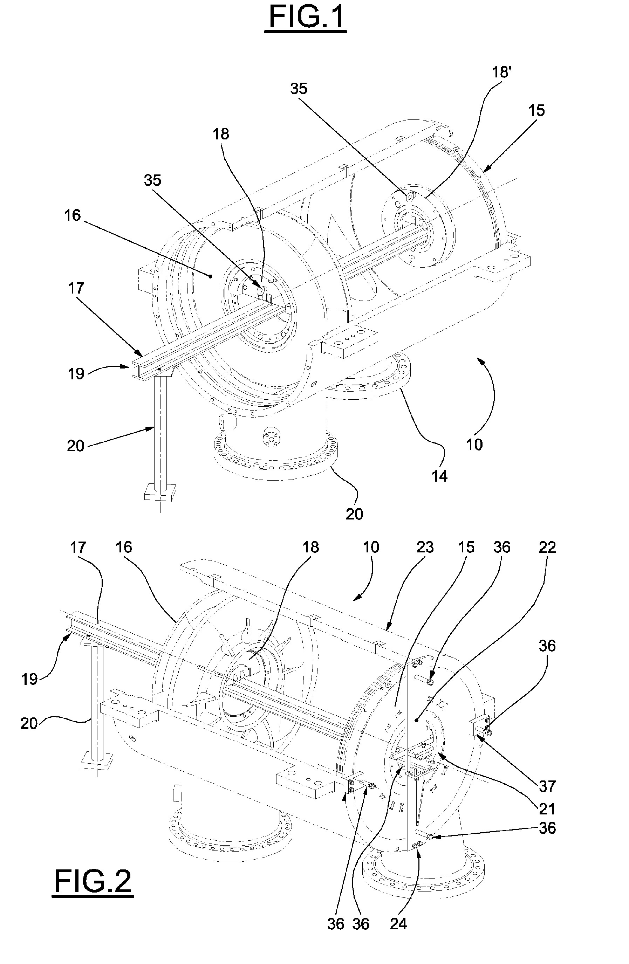

Sur les figures 1 et 2, on a représenté, en perspective, un compresseur centrifuge de type à enveloppe à plan de joint vertical en cours de maintenance.

Comme on le voit, le compresseur comprend essentiellement un corps ou une enveloppe 10, fictivement tronqué sur les figures, de forme générale sensiblement cylindrique et pourvu de ses tuyauteries d'aspiration 12 et de refoulement 14.

Comme cela est classique, le corps 10 est, à l'état assemblé, obturé, à l'une de ses extrémités, par un fond 15 et, à son extrémité opposée, par un couvercle (non représenté) tous deux rapportés dans le mode de réalisation envisagé. Il comporte intérieurement une cartouche regroupant les éléments aérodynamiques ainsi que le rotor du compresseur, ainsi qu'une volute 16.

Comme indiqué précédemment, le fond 15 est généralement pourvu d'un ou de plusieurs joints assurant son étanchéité, qui doivent être périodiquement remplacés lors d'opérations de maintenance, qui impliquent le démontage du couvercle, de la volute 16 et du fond 15.

Comme on le voit sur les figures, on utilise pour cela un outil de démontage qui comprend essentiellement un rail 17 définissant un chemin de roulement qui s'étend axialement à l'intérieur du corps du compresseur 10, ainsi qu'un ou plusieurs chariots, 18 et 18', qui viennent se fixer chacun sur l'élément du compresseur à démonter et qui viennent rouler le long du chemin de roulement pour assurer l'extraction de cet élément.

Comme on le voit sur les figures 1 et 2, le rail 17 s'étend en position horizontale. Compte tenu des efforts à supporter par le rail, celui-ci est par exemple constitué par une poutre massive en acier ayant la forme d'un profilé en H.

Il est maintenu à cet effet, à une première extrémité 19, par un pied 20 sur lequel il repose en appui.

A l'autre extrémité 21, l'outil de démontage comprend une platine 22 qui assure le maintien et le centrage du rail 17 conjointement avec le pied 20.

On voit en effet sur la figure 2 que la platine 22 a une forme allongée et comprend deux extrémités mutuellement opposées 23 et 24 par lesquelles elle vient se visser sur la tranche d'extrémité du corps 10, du côté du fond 15.

Elle est pourvue, en partie médiane, d'un orifice 25 de forme générale carrée ou rectangulaire apte à permettre le passage de l'extrémité correspondante 21 du rail 17.

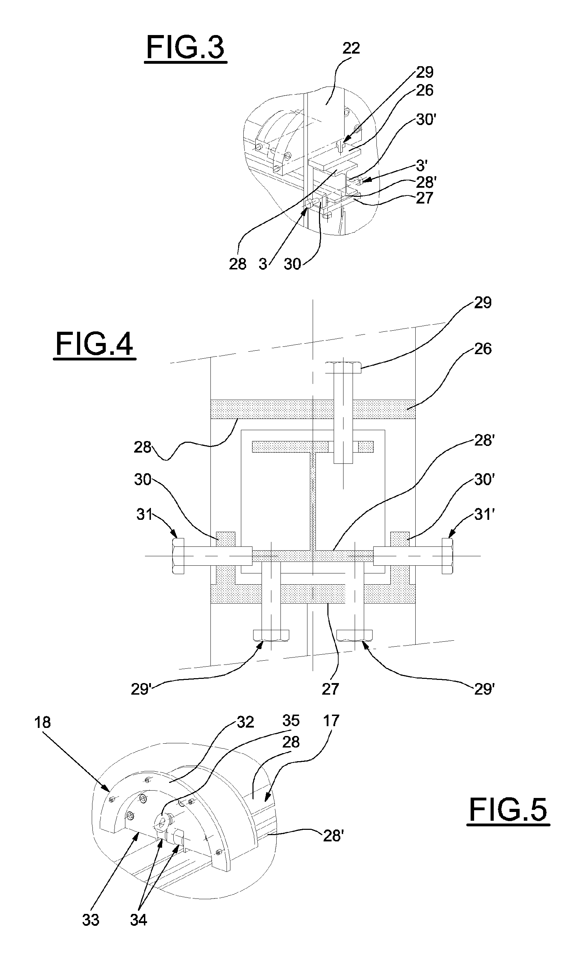

En se référant à la figure 3, la platine 22 est encore pourvue d'éléments de paroi 26 et 27 transversaux situés de part et d'autre du passage 25, en regard de deux ailes parallèles 28 et 28' du rail 17. Chaque élément de paroi 26 et 27 est pourvu d'un ou de plusieurs trous taraudés pour le passage d'une vis, telle que 29, permettant le réglage vertical de l'extrémité 21 du rail. Par exemple, comme visible sur la figure 4, on prévoit une vis 29 sur l'élément de paroi supérieur, et deux vis 29' sur l'élément inférieur.

Pour centrer le rail transversalement c'est-à-dire horizontalement, la platine est encore pourvue de deux pièces de centrage latérales sous la forme de deux rebords 30 et 30' dressés par exemple à partir de l'élément de paroi inférieur 27 et entre lesquels est insérée l'extrémité 21 du rail 17.

Ces rebords 30 et 30' sont également pourvus chacun de trous taraudés permettant le passage de vis de réglage, telles que 31 et 31'.

Ainsi, grâce à ce mécanisme de centrage dans les directions horizontale et verticale, on assure le verrouillage du rail 17 en position et son réglage en position parfaitement horizontale dans l'axe du corps du compresseur.

En se référant maintenant à la figure 5, on voit que le chariot 18 ou 18' a une forme générale hémicylindrique et comporte un épaulement 32 périphérique permettant sa fixation, par vissage, soit sur la volute 16, soit sur le fond 15 démonté.

Au voisinage de son bord périphérique droit 33, le chariot 18 comprend deux rouleaux 34, deux autres rouleaux étant prévus près de l'autre bord, au total quatre rouleaux permettant un appui stable sur le chemin du roulement. I1 comporte encore, sur l'une des ses faces 35, un anneau permettant d'exercer un effort de traction pour l'extraction de la volute 16 ou du fond 15.

On notera enfin qu'on prévoit avantageusement des vis poussée, de type vis vérin, telles que 36 (figure 2) qui s'insèrent au voisinage des zones d'extrémité de la platine 22 pour exercer un effort sur le couvercle 15 pour le désolidariser du corps du compresseur 10. On peut également prévoir de telles vis 36 sur des pattes 37 montées transversalement sur le corps du compresseur.

L'outil de démontage qui vient d'être décrit peut servir aussi bien au démontage des éléments tels que la volute 16, le fond 15, ou encore le couvercle, qu'à leur montage dans le corps du compresseur.

Pour procéder au démontage, il convient d'installer la platine 22 ainsi que les pattes 37 sur l'arrière du compresseur, de monter le rail 17 à l'intérieur du corps 10 du compresseur à travers l'ouverture 25, à travers la volute 16 et le fond 15 et en appui sur le pied 20, de monter le chariot 18 et de le fixer sur la volute 16, de centrer le chemin de roulement grâce aux vis 29 et 31 et de retirer ainsi, par traction, la volute 16.

Avantageusement, on récupère le chariot 18, et on l'insère dans le corps 10, après l'avoir retourné puis on le fixe sur le couvercle 15. On désolidarise alors le fond 15, grâce aux vis 36 puis on retire le couvercle en exerçant une traction sur le chariot.

L'opération de remontage s'effectue dans l'ordre inverse.

En d'autres termes, on fait glisser le fond 15 sur le chemin de roulement grâce au chariot 18 et aux rouleaux 34 qu'il porte, on démonte le chariot 18, on le retourne, puis on le monte sur la volute 16, puis on insère, de la même manière, la volute 16 à l'intérieur du corps du compresseur.

On notera enfin que l'invention n'est pas limitée au mode de réalisation décrit.

En effet, il est également possible, en variante, de doter l'outil de tiges filetées s'étendant par exemple parallèlement et au dessus du rail 17 et qui coopèrent avec un trou taraudé prévu dans le chariot 18. Ainsi, par rotation de la tige filetée, on facilite la sortie ou l'entrée des pièces lourdes, telles que la volute ou le fond.

Il est également possible, en variante, de doter l'outil d'un système de contrepoids prévu au niveau de l'extrémité libre 19 du rail pour permettre la manutention de l'outil en position horizontale et, en particulier, pour compenser le poids de l'outillage, pouvoir insérer plus facilement le chemin de roulement en portion horizontale dans le corps du compresseur à démonter et pour permettre la manutention du rail 17 en appui sur le pied 20.

I1 est enfin possible de prévoir un support supplémentaire pour le rail 17 à la sortie du corps du compresseur afin de permettre d'extraire l'élément à démonter tout en conservant le rail en position horizontale. En effet, dans ce cas, après extraction de la volute ou du fond du corps du compresseur, on place derrière l'élément à démonter le support additionnel et l'on ôte le premier pied afin de permettre l'extraction totale de l'élément à démonter.

## Revendications

1. Outil de démontage d'un élément interne d'un corps de compresseur (10), **caractérisé en ce qu'**il comprend un chemin de roulement (17) destiné à être introduit axialement dans le corps du compresseur (10) en passant à travers l'élément à démonter (15, 16), un dispositif de fixation et de centrage (22) du chemin de roulement en position axiale par rapport au corps du compresseur et un chariot (18) destiné à être fixé sur l'élément à démonter et comprenant au moins un rouleau (34) destiné à venir en appui sur le chemin de roulement.

2. Outil selon la revendication 1, **caractérisé en ce que** le dispositif de fixation et de centrage comprend un pied (20) prévu à l'une des extrémités du corps du compresseur et sur lequel repose une première extrémité (19) du chemin de roulement et une platine (22) fixée à l'autre extrémité du corps du compresseur et comprenant un passage axial (25) pour une deuxième extrémité du chemin de roulement.

3. Outil selon la revendication 2, **caractérisé en ce que** la platine comprend des éléments de paroi axiaux (26, 27 ; 30, 30') s'étendant, à l'usage, généralement parallèlement au chemin de roulement et comprenant des passages pour des vis de réglage et de centrage du chemin de roulement.

4. Outil selon l'une quelconque des revendications 2 et 3, **caractérisé en ce que** la platine est pourvue, au voisinage de ses extrémités, de vis (36) de poussée aptes à exercer, lors de leur vissage, un effort sur ledit élément pour le désolidariser du corps du compresseur (10).

5. Outil selon l'une quelconque des revendications 2 à 4, **caractérisé en ce qu'**il comporte en outre un ensemble d'au moins une tige filetée coopérant avec un taraudage pratiqué dans le chariot (18).

6. Outil selon l'une quelconque des revendications 2 à 5, **caractérisé en ce qu'**il comporte en outre un système de contrepoids prévu au niveau de la première extrémité du chemin de roulement (17).

7. Outil selon l'une quelconque des revendications 1 à 6, **caractérisé en ce que** le chemin de roulement est constitué par une barre (17) ayant une section en H.

8. Utilisation d'un outil selon l'une quelconque des revendications 1 à 7 pour le démontage d'une volute (16) d'un compresseur.

9. Utilisation d'un outil selon l'une quelconque des revendications 1 à 7 pour le démontage d'un fond (15) ou d'un couvercle d'un compresseur.
